# EUROPEAN PATENT SPECIFICATION

(11) **EP 4 476 925 B1**
(45) Date of publication and mention of the grant of the patent: **02.12.2026**
(21) Application number: 22925296.0
(22) Date of filing: 09.02.2022
(51) Int. Cl.: H04W 4/02, H04W 4/40

(54) **TRUST VALIDATION OF LOCATION INFORMATION**
VERTRAUENSVALIDIERUNG VON STANDORTINFORMATIONEN
VALIDATION DE CONFIANCE D'INFORMATIONS DE LOCALISATION

(43) Date of publication of application: 18.12.2024
(73) Proprietor: Telefonaktiebolaget LM Ericsson (publ), 164 83 Stockholm (SE)
(72) Inventor: ZHANG, Fengpei, Guangzhou, Guangdong 510630 (CN)
(74) Representative: Ericsson
(86) International application number: PCT/CN2022/075665
(87) International publication number: WO 2023/150933

(56) References cited:
- WO-A2-2007/072400
- CN-A- 107 079 039
- CN-A- 109 348 413
- CN-A- 111 346 371
- CN-A- 112 069 279
- FELIPE BOEIRA ET AL: "Vouch", MODELING, ANALYSIS AND SIMULATION OF WIRELESS AND MOBILE SYSTEMS, ACM, 2 PENN PLAZA, SUITE 701NEW YORKNY10121-0701USA, 25 October 2018 (2018-10-25), pages 241 - 248, XP058417959, ISBN: 978-1-4503-5960-3, DOI: 10.1145/3242102.3242125

## Description

### Technical Field

The present disclosure is related to the field of telecommunications, and in particular, to methods, User Equipments (UEs), and network nodes for trust validation of location information.

### Background

Vehicle-to-everything (V2X) is a new generation of wireless communication technologies that enables data exchanges between vehicles and everything in their surroundings. V2X supports unified connectivity between connected entities in a V2X environment, such as vehicles, roadside equipments, and mobile devices, allowing them to transmit information such as their current speeds, positions, directions, etc. and make intelligent decisions. The technology creates an Intelligent Transportation System (ITS), transforming the experience of drivers, pedestrians, and transit riders by creating a more comfortable and safer transportation environment. It also has much significance in improving traffic efficiency and reducing greenhouse gas emissions and accident rates.

Typically, V2X supports several types of communications:
- Vehicle-to-Vehicle (V2V) covers communication between two or more vehicles;
- Vehicle-to-Pedestrian (V2P) covers the connection between vehicles and roadside users;
- Vehicle-to-Infrastructure (V2I) is the communication between road entities and infrastructure units; and
- Vehicle-to-Network (V2N) is the communication between vehicles and a communication network.

Most of V2X systems use a sophisticated Public Key Infrastructure (PKI)-based approach to facilitate trusted communication. Despite the security and privacy guarantees offered by such systems, there are several challenges to overcome. One of the challenges is attack prevention. A common attack in V2X could be message spoofing attack, in which an attacker provides incorrect location information to the network's vehicles. False information about vehicle location can lead to activities that are detrimental in such environments. Spoofing attacks may also facilitate other attacks where vehicle identification is used as the tool for launching attacks.

F. Boeira et al. describe "Vouch: A Secure Proof-of-Location Scheme for VANETs", which uses roadside units to provide signed location proofs combined with plausibility checking. However, existing proof-of-location mechanisms face limitations when applied to V2X communications, including challenges in handling real-time requirements, high-mobility environments, privacy preservation, and providing efficient trust validation without requiring complex infrastructure or frequent proof generation.

### Summary

According to a first aspect of the present disclosure, a method at a UE for verifying location information from another UE according to claim 1 is provided. The method comprises: receiving, from the other UE, reference location information and updated location information; determining whether the reference location information is valid or not; determining whether the updated location information is valid or not at least based on the reference location information in response to determining that the reference location information is valid.

In some embodiments, the reference location information is signed by a first network node, and the updated location information is not signed by the first network node. In some embodiments, the reference location information and the updated location information are received separately. In some embodiments, for each of the reference location information, more than one updated location information is received. In some embodiments, the updated location information has a later timestamp than that of the reference location information. In some embodiments, the step of determining whether the updated location information is valid or not comprises: determining a time difference between a first timestamp of the reference location information and a second timestamp of the updated location information; and determining that the updated location information is invalid in response to determining that the time difference is greater than or equal to a time threshold that is predetermined or configured.

According to a second aspect of the present disclosure, a UE is provided. The UE comprises: a processor; a memory storing instructions which, when executed by the processor, cause the processor to perform the method of any of the first aspect.

According to a third aspect of the present disclosure, a method at a UE for providing another UE with trusted location information according to claim 11 is provided. The method comprises: transmitting, to a first network node, a request for location information for the UE; receiving, from the first network node, the location information that is signed by the first network node; and transmitting, to the other UE, the received location information, as reference location information, and updated location information, such that the other UE can verify the updated location information at least based on the reference location information.

According to a fourth aspect of the present disclosure, a UE is provided. The UE comprises: a processor; a memory storing instructions which, when executed by the processor, cause the processor to perform the method of any of the third aspect.

### Brief Description of the Drawings

The foregoing and other features of the present disclosure will become more fully apparent from the following description and appended claims, taken in conjunction with the accompanying drawings. Understanding that these drawings depict only several embodiments in accordance with the disclosure and therefore are not to be considered limiting of its scope, the disclosure will be described with additional specificity and detail through use of the accompanying drawings.
Fig. 1 is a diagram illustrating an exemplary telecommunications network in which trust validation of location information may be applicable according to an embodiment of the present disclosure.
Fig. 2 is a diagram illustrating an exemplary architecture of C-V2X in which trust validation of location information may be applicable according to an embodiment of the present disclosure.
Fig. 3 is a diagram illustrating an exemplary system in which trust validation of location information may be applicable according to an embodiment of the present disclosure.
Fig. 4 is a diagram illustrating an exemplary procedure for trust validation of location information according to an embodiment of the present disclosure.
Fig. 5 is a diagram illustrating an exemplary V2V message according to an embodiment of the present disclosure.
Fig. 6 is a flow chart illustrating an exemplary location validation procedure according to an embodiment of the present disclosure.
Fig. 7A and Fig. 7B are diagrams illustrating exemplary scenarios for trust validation of location information according to an embodiment of the present disclosure.
Fig. 8 is a flow chart illustrating an exemplary method at a UE for verifying location information from another UE according to an embodiment of the present disclosure.
Fig. 9 is a flow chart illustrating an exemplary method at a UE for providing another UE with trusted location information according to an embodiment of the present disclosure.
Fig. 10 is a flow chart illustrating an exemplary method at a first network node for providing trusted location information according to an embodiment of the present disclosure.
Fig. 11 is a flow chart illustrating an exemplary method at a second network node for exposing location information for a UE according to an embodiment of the present disclosure.
Fig. 12 schematically shows an embodiment of an arrangement which may be used in a UE or a network node according to an embodiment of the present disclosure.
Fig. 13 is a block diagram illustrating an exemplary UE according to an embodiment of the present disclosure.
Fig. 14 is a block diagram illustrating another exemplary UE according to another embodiment of the present disclosure.
Fig. 15 is a block diagram illustrating an exemplary first network node according to an embodiment of the present disclosure.
Fig. 16 is a block diagram illustrating an exemplary second network node according to an embodiment of the present disclosure.

### Detailed Description

Hereinafter, the present disclosure is described with reference to embodiments shown in the attached drawings. However, it is to be understood that those descriptions are just provided for illustrative purpose, rather than limiting the present disclosure. Further, in the following, descriptions of known structures and techniques are omitted so as not to unnecessarily obscure the concept of the present disclosure.

Those skilled in the art will appreciate that the term "exemplary" is used herein to mean "illustrative," or "serving as an example," and is not intended to imply that a particular embodiment is preferred over another or that a particular feature is essential. Likewise, the terms "first" and "second," and similar terms, are used simply to distinguish one particular instance of an item or feature from another, and do not indicate a particular order or arrangement, unless the context clearly indicates otherwise. Further, the term "step," as used herein, is meant to be synonymous with "operation" or "action." Any description herein of a sequence of steps does not imply that these operations must be carried out in a particular order, or even that these operations are carried out in any order at all, unless the context or the details of the described operation clearly indicates otherwise.

Conditional language used herein, such as "can," "might," "may," "e.g.," and the like, unless specifically stated otherwise, or otherwise understood within the context as used, is generally intended to convey that certain embodiments include, while other embodiments do not include, certain features, elements and/or states. Thus, such conditional language is not generally intended to imply that features, elements and/or states are in any way required for one or more embodiments or that one or more embodiments necessarily include logic for deciding, with or without author input or prompting, whether these features, elements and/or states are included or are to be performed in any particular embodiment. Also, the term "or" is used in its inclusive sense (and not in its exclusive sense) so that when used, for example, to connect a list of elements, the term "or" means one, some, or all of the elements in the list. Further, the term "each," as used herein, in addition to having its ordinary meaning, can mean any subset of a set of elements to which the term "each" is applied.

The term "based on" is to be read as "based at least in part on." The term "one embodiment" and "an embodiment" are to be read as "at least one embodiment." The term "another embodiment" is to be read as "at least one other embodiment." Other definitions, explicit and implicit, may be included below. In addition, language such as the phrase "at least one of X, Y and Z," unless specifically stated otherwise, is to be understood with the context as used in general to convey that an item, term, etc. may be either X, Y, or Z, or a combination thereof.

The terminology used herein is for the purpose of describing particular embodiments only and is not intended to be limitation of example embodiments. As used herein, the singular forms "a", "an", and "the" are intended to include the plural forms as well, unless the context clearly indicates otherwise. It will be further understood that the terms "comprises", "comprising", "has", "having", "includes" and/or "including", when used herein, specify the presence of stated features, elements, and/or components etc., but do not preclude the presence or addition of one or more other features, elements, components and/ or combinations thereof. It will be also understood that the terms "connect(s)," "connecting", "connected", etc. when used herein, just mean that there is an electrical or communicative connection between two elements and they can be connected either directly or indirectly, unless explicitly stated to the contrary.

Of course, the present disclosure may be carried out in other specific ways than those set forth herein without departing from the scope and essential characteristics of the disclosure. One or more of the specific processes discussed below may be carried out in any electronic device comprising one or more appropriately configured processing circuits, which may in some embodiments be embodied in one or more application-specific integrated circuits (ASICs). In some embodiments, these processing circuits may comprise one or more microprocessors, microcontrollers, and/or digital signal processors programmed with appropriate software and/or firmware to carry out one or more of the operations described above, or variants thereof. In some embodiments, these processing circuits may comprise customized hardware to carry out one or more of the functions described above. The present embodiments are, therefore, to be considered in all respects as illustrative and not restrictive.

Although multiple embodiments of the present disclosure will be illustrated in the accompanying Drawings and described in the following Detailed Description, it should be understood that the disclosure is not limited to the disclosed embodiments, but instead is also capable of numerous rearrangements, modifications, and substitutions without departing from the present disclosure that as will be set forth and defined within the claims.

Further, please note that although the following description of some embodiments of the present disclosure is given in the context of 5G New Radio (5G NR), the present disclosure is not limited thereto. In fact, as long as trust validation of location information is involved, the inventive concept of the present disclosure may be applicable to any appropriate communication architecture, for example, to Global System for Mobile Communications (GSM) / General Packet Radio Service (GPRS), Enhanced Data Rates for GSM Evolution (EDGE), Code Division Multiple Access (CDMA), Wideband CDMA (WCDMA), Time Division - Synchronous CDMA (TD-SCDMA), CDMA2000, Worldwide Interoperability for Microwave Access (WiMAX), Wireless Fidelity (Wi-Fi), Long Term Evolution (LTE), etc. Therefore, one skilled in the arts could readily understand that the terms used herein may also refer to their equivalents in any other infrastructure. For example, the term "User Equipment" or "UE" used herein may refer to a mobile device, a mobile terminal, a mobile station, a user device, a user terminal, a wireless device, a wireless terminal, an IoT device, a vehicle, or any other equivalents. For another example, the term "gNB" used herein may refer to a base station, a base transceiver station, an access point, a hot spot, a NodeB (NB), an evolved NodeB (eNB), a network element, or any other equivalents. Further, the term "node" used herein may refer to a UE, a functional entity, a network entity, a network element, a network equipment, a network function, or any other equivalents.

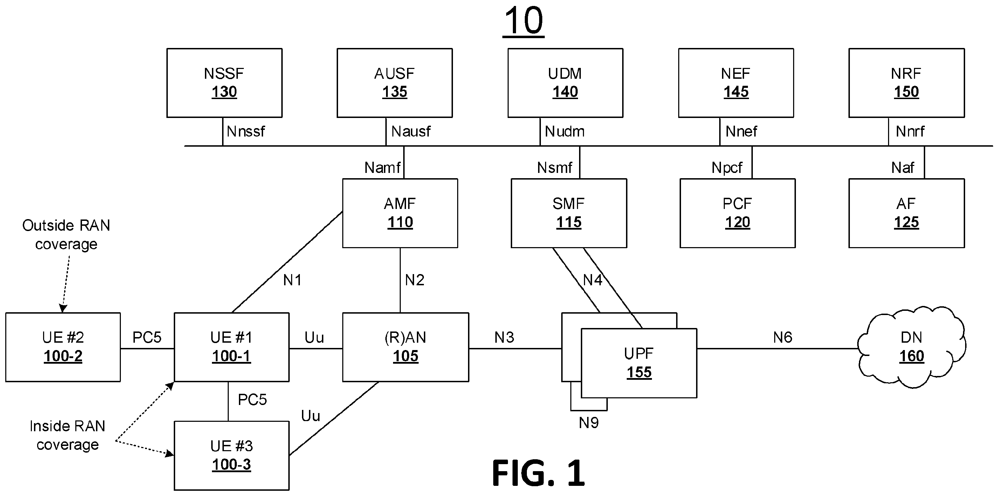

Fig. 1 is a diagram illustrating an exemplary telecommunications network 10 in which trust validation of location information may be applicable according to an embodiment of the present disclosure. Although the telecommunications network 10 is a network defined in the context of 5G NR, the present disclosure is not limited thereto.

As shown in Fig. 1, the network 10 may comprise one or more UEs 100-1, 100-2, and 100-3 (collectively, UE(s) 100) and a (radio) access network ((R)AN) 105, which could be a base station, a Node B, an evolved NodeB (eNB), a gNB, or an Access Network (AN) node which provides the UEs 100 with access to the network 10. Further, the network 10 may comprise its core network portion comprising (but not limited to) an Access & Mobility Management Function (AMF) 110, a Session Management Function (SMF) 115, a Policy Control Function (PCF) 120, an Application Function (AF) 125, a Network Slice Selection Function (NSSF) 130, an AUthentication Server Function (AUSF) 135, a Unified Data Management (UDM) 140, a Network Exposure Function (NEF) 145, a Network Repository Function (NRF) 150, and one or more UPFs 155. As shown in Fig. 1, these entities may communicate with each other via the service-based interfaces, such as, Namf, Nsmf, Npcf, etc. and/or the reference points, such as, N1, N2, N3, N6, N9, etc.

However, the present disclosure is not limited to Fig. 1. In some other embodiments, the network 10 may comprise additional network functions, less network functions, or some variants of the existing network functions shown in Fig. 1. For example, in a network with the 4G architecture, the entities which perform these functions may be different from those shown in Fig. 1. For another example, in a network with a mixed 4G/5G architecture, some of the entities may be same as those shown in Fig. 1, and others may be different. Further, some of the functions shown in Fig. 1 are not essential to the embodiments of the present disclosure. In other words, some of them may be missing from some embodiments of the present disclosure.

Further, as shown in Fig. 1, the UPFs 155 may be communicatively connected to the Data Network (DN) 160 which may be, or in turn communicatively connected to, the Internet, such that the UEs 100 may finally communicate its user plane data with other devices outside the network 10, for example, via the RAN 105 and the UPFs 155.

Device-to-device (D2D) communication often refers to the technology that allows UE to communicate with each other with or without the involvement of network infrastructures such as an access point or base stations (e.g., the RAN 105). 3GPP introduces the PC5 interface (a.k.a. "sidelink" in 3GPP RAN specification) to enable D2D direct communication. D2D may be one of the essential technologies to support 5G wireless network challenges in many industries.

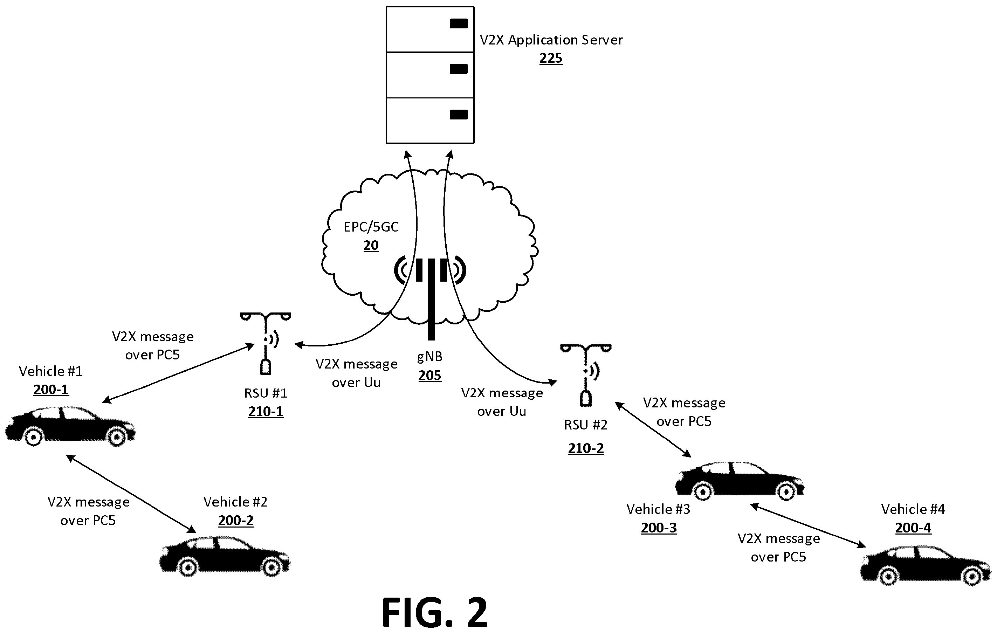

As shown in Fig. 1, the UEs 100 may communicate with each other via sidelinks over the reference point PC5. For example, the UE #2 100-2 may communicate with the UE #1 100-1 via the PC5 interface therebetween, and therefore the UE #2 100-2 may communicate with the RAN 105 indirectly, for example, when the UE #1 100-1 functions as a relay UE. For another example, the UE #3 100-3 may also communicate with the UE #1 100-1 via the PC5 interface therebetween while the UE #3 100-3 may directly communicate with the RAN 105 via the Uu interface therebetween. In other words, the UE #1 100-1 and the UE #3 100-3 are located inside RAN coverage while the UE #2 100-2 is located outside RAN coverage, as shown in Fig. 1. Further, although traffic relaying with only one hop is shown in Fig. 1, the present disclosure is not limited thereto. In some other embodiments, one or more hops of relays may be applicable. For example, a UE (e.g., a vehicle #2 200-2 shown in Fig. 2) may communicate with a RAN node (e.g., a gNB 205 shown in Fig. 2) via two or more hops (e.g., a vehicle #1 200-1 and a Road Side Unit (RSU) #1 210-1 shown in Fig. 2).

One promising use case of D2D communication is Cellular-V2X (C-V2X) that allows a vehicle directly to communicate with another vehicle (V2V) or an RSU (V2I). This will be described in detail with reference to Fig. 2.

Fig. 2 is a diagram illustrating an exemplary architecture of C-V2X in which trust validation of location information may be applicable according to an embodiment of the present disclosure. As shown in Fig. 2, the exemplary C-V2X architecture may comprise one or more RAN nodes (e.g., gNB) 205, one or more RSUs (e.g., an RSU #1 210-1 and an RSU #2 210-2, which may be collectively referred to as "the RSU 210" hereinafter), one or more vehicles (e.g., a vehicle #1 200-1 through a vehicle #4 200-4, which may be collectively referred to as "the vehicles 200" hereinafter), a core network (e.g., an Evolved Packet Core (EPC)/5G Core (5GC) 20), and one or more V2X application servers.

The elements shown in Fig. 2 may have their counterparts shown in Fig. 1. For example, the vehicles 200 shown in Fig. 2 may be the UE #2 100-2 shown in Fig. 1 when they are not communicating with the gNB 205 directly. For another example, the RSU 210 shown in Fig. 2 may be the UE #1 100-1 shown in Fig. 1 when they are functioning as relays for the vehicles 200. For yet another example, the gNB 205 may be the RAN 105, the EPC/5GC 20 may be the telecommunications network 10 excluding the UEs 100, the RAN 105, the AF 125, and/or the DN 160, and the V2X application server 225 may be the AF 125 shown in Fig. 1. However, the present disclosure is not limited thereto. In some other embodiments, an additional or alternative correspondence may be possible.

As shown in Fig. 2, the vehicle #2 200-2 and the vehicle #4 200-4 may communicate with the vehicle #1 200-1 and the vehicle #3 200-3, respectively, via the PC5 reference point by using V2V communication. The vehicle #1 200-1 and the vehicle #3 200-3 may communicate with the RSU #1 210-1 and the RSU #2 210-2, respectively, via the PC5 reference point by using V2I communication, while they may function as relays for the vehicle #2 200-2 and the vehicle #4 200-4, respectively. In other words, the vehicle #1 200-1 and the vehicle #3 200-3 may not only communicate its own data traffic from/to the RSU #1 210-1 and the RSU #2 210-2, respectively, but also relay the data traffic for the vehicle #2 200-2 and the vehicle #4 200-4 from/to the RSU #1 210-1 and the RSU #2 210-2, respectively.

As also shown in Fig. 2, the RSU #1 210-1 and the RSU #2 210-2 may function as relays for the vehicles 200, while communicating with the gNB 205 via the Uu interface by using V2N communication. In this way, all the vehicles that are directly or indirectly coupled to the gNB 205 may access, via gNB 205 and the EPC/5GC 20, the V2X application server 225 for its service.

The D2D technology only provides connectivity and basic authentication and authorization. However, as mentioned above, one important security aspect is still missing, that is, message forgery detection, especially location spoofing.

In V2X, when a vehicle receives a message containing location information from another vehicle, it is very challenging and costly for the vehicle to validate whether the location information is trusted or not. The means of location spoofing may be one of the following:
- GPS spoofing attack: an attacker alters the signals or data associated with the GPS to produce different position, navigation, or timing information. It is a way to trick the GPS receiver (and the applications running on it) into thinking that the device is in another place or another time;
- Malicious application: A hacked device application may send fake location information to other devices.

Currently, some techniques are known for a vehicle to detect location spoofing. For example, some research has been done on how an individual vehicle can detect forged location information sent from other vehicles to avoid safety threat. This approach uses Advanced Driver Assistance System (ADAS) sensors (such as RADAR, LiDAR and/or video camera) to cross check the location information sent from other vehicles. Obviously, this solution is very complicated and costly.

Therefore, some embodiments of the present disclosure propose a trust validation solution for the location information exchanged through V2V/D2D communication, by leveraging the network-based location information from a trusted location source.

Some embodiments of the present disclosure may expose a network capability to vehicles to retrieve their own network-based location through a device gateway that may or may not be integrated with an SCEF/NEF. Some embodiments of the present disclosure may provide a device gateway that may digitally sign the location information so that the vehicles that receive this location information through V2V communication can verify the data using PKI. Further, some embodiments of the present disclosure may leverage the trusted network location, such that a vehicle can validate the trust of other location information (e.g., GPS location).

With the embodiments, the complexity of detecting location spoofing for V2V communication may be significantly lowered such that V2X safety can be improved. Further, some embodiments of the present disclosure may reinforce the added value of CSP's network positioning service, such that the CSP's network positioning service may complement GPS and others OTT positioning solution.

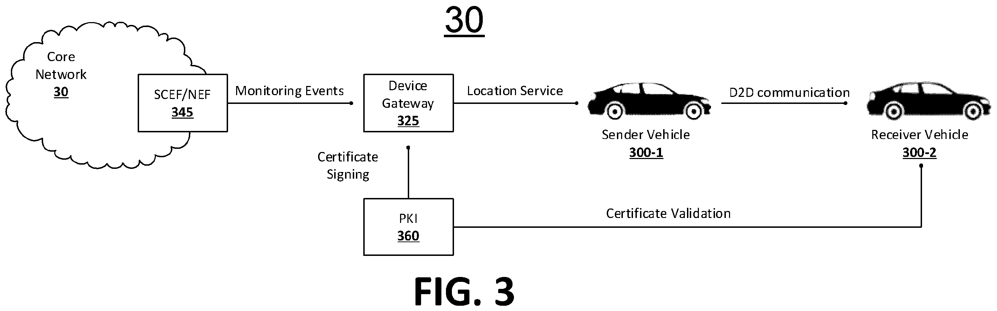

Fig. 3 is a diagram illustrating an exemplary system 30 in which trust validation of location information may be applicable according to an embodiment of the present disclosure. As shown in Fig. 3, the system 30 may comprise a sender vehicle 300-1, a receiver vehicle 300-2, a device gateway 325, a PKI 360, and an SCEF/NEF 345. Please note that the present disclosure is not limited thereto. For example, although a vehicle is shown as the sender vehicle 300-1, it may also function as the receiver vehicle 300-2 when it receives location information transmitted from another vehicle. For another example, although the device gateway 325 is shown as being separated from the core network 30 to which the SCEF/NEF 345 belongs, it may be located inside the core network 30, and in such a case, the SCEF/NEF 345 may be omitted.

In some embodiments, the SCEF/NEF 345 may be a network exposure function (e.g., the NEF 145 shown in Fig. 1) in the core network 30 defined by 3GPP to expose network capabilities to AFs (e.g., the AF 125 shown in Fig. 1). Please note that the SCEF/NEF 345 currently may not support network exposure to UE. "Monitoring Events" is one of the network capabilities that is used to monitor the events that can be detected by the core network 30, such as roaming status of a UE, a location of a UE, or reachability of a UE.

In some embodiments, the device gateway 325 may be an entity that provides network exposure to a UE. The device gateway 325 may authenticate and/or authorize devices (e.g., UEs or connected vehicles) and be integrated with the SCEF/NEF 345 to expose UE related network capabilities. The present disclosure is not limited thereto, and in some other embodiments, the device gateway 325 may be located remotely from the SCEF/NEF 345. Further, the device gateway 325 may be provided by a CSP or third party service providers.

In some embodiments, the PKI 360 may be a system that governs the issuance of digital certificates to protect sensitive data, provide unique digital identities for users or devices. In some embodiments, the PKI 360 may be a Certificate Authority (CA) that issues digital certificates. A digital certificate may certify the ownership of a public key by the named subject of the certificate. This allows others (relying parties) to rely upon signatures or on assertions made about the private key that corresponds to the certified public key. A CA acts as a trusted third party - trusted both by the subject (owner) of the certificate and by the party relying upon the certificate.

In some embodiments, the sender vehicle 300-1 may be a vehicle that sends V2V messages to other vehicles, for example, in a unicast, multicast, groupcast, and/or broadcast manner. In some embodiments, the receiver vehicle 300-2 may be a vehicle that receives V2V messages from other vehicles.

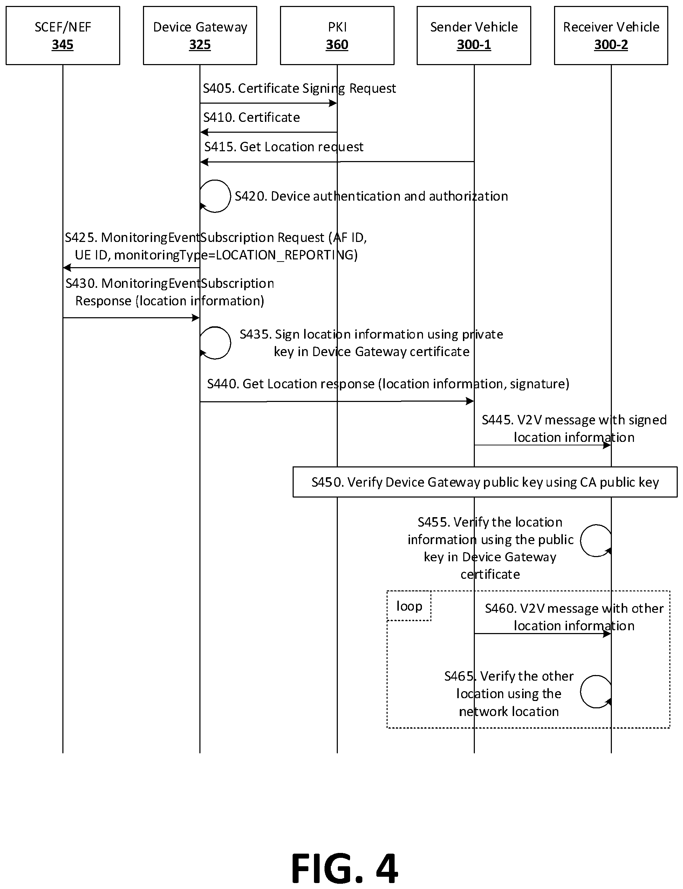

As shown in Fig. 3, the device gateway 325 may provide the sender vehicle 300-1 with a trusted location service with the certificate issued by the PKI 360, while the receiver vehicle 300-2 may verify the location information that is signed by the device gateway 325 and received from the sender vehicle 300-1 with the help of the PKI 360. The details of the procedure will be described below in detail with reference to Fig. 4.

Fig. 4 is a diagram illustrating an exemplary procedure for trust validation of location information according to an embodiment of the present disclosure. As shown in Fig. 4, the procedure may begin at step S405 where the device gateway 325 may send a Certificate Signing Request (CSR) to the PKI 360 to ask for a certificate. At step S410, the PKI 360 may issue a certificate to the device gateway 325 after validating that the information is CSR.

At step S415, the sender vehicle 300-1 may call the device gateway 325 to get its own network-based location, for example, by transmitting a "*Get Location*" request to the device gateway 325. In some embodiments, the sender vehicle 300-1 may include its identity in the request to identify itself. In some embodiments, the sender vehicle 300-1 may include information required for authenticating itself in the request.

At step S420, the device gateway 325 may authenticate the sender vehicle 300-1, for example, based on its network identity. Additionally or alternatively, the device gateway 325 may authorize the request, for example, based on a UE/vehicle profile stored at the device gateway 325 and/or another place.

At step S425, after the authentication/authorization, the device gateway 325 may call the SCEF/NEF 345's *Monitoring Events* API to retrieve a network-based location of the sender vehicle 300-1, for example, by transmitting to the SCEF/NEF 345 a *MonitoringEventSubscription* request message. The request may include at least one of an AF ID of the device gateway 325, a UE ID (which is obtained from the device authentication procedure), and a "*monitoringType*" IE set to "*LOCATION_REPORTING*"*.* However, the present disclosure is not limited thereto. In some other embodiments, different signalling may be used to request the location information of the sender vehicle 300-1.

At step S430, the SCEF/NEF 345 may send a response including the requested location information to the device gateway 325, for example, by transmitting to the device gateway 325 a *MonitoringEventSubscription* response message. In some embodiments, the location information may be obtained by the SCEF/NEF 345 from another network function in the core network 30, for example, a Mobility Management Entity (MME)/Access & Mobility Management Function (AMF).

At step S435, the device gateway 325 may sign the location information, for example, by using the private key in its own certificate that is obtained at step S410. In some embodiments, the location information may comprise at least one of the location information from the SCEF/NEF 345, the UE ID, and a timestamp.

At step S440, the device gateway 325 may send the location information and the signature to the sender vehicle 300-1 as a response, for example, by transmitting to the sender vehicle 300-1 a "Get Location" response.

At step S445, the sender vehicle 300-1 may send a V2V message to the receiver vehicle 300-2, and the V2V message may comprise the location information and the signature.

At step S450, the receiver vehicle 300-2 may validate the device gateway 325's public key through the PKI 360.

At step S455, the receiver vehicle 300-2 may verify the signature in the V2V message, which is received at step S445, by using the device gateway 325's public key. In some embodiments, the public key of the device gateway 325 may be distributed to the receiver vehicle 300-2 at any appropriate time, for example, before, during, or after the reception of the V2V message. After a successful verification of the signature, the receiver vehicle 300-2 may trust this location information that is sent by the sender vehicle 300-1. In some embodiments, the signed location information may be referred to as "reference location information" or "network-based location information".

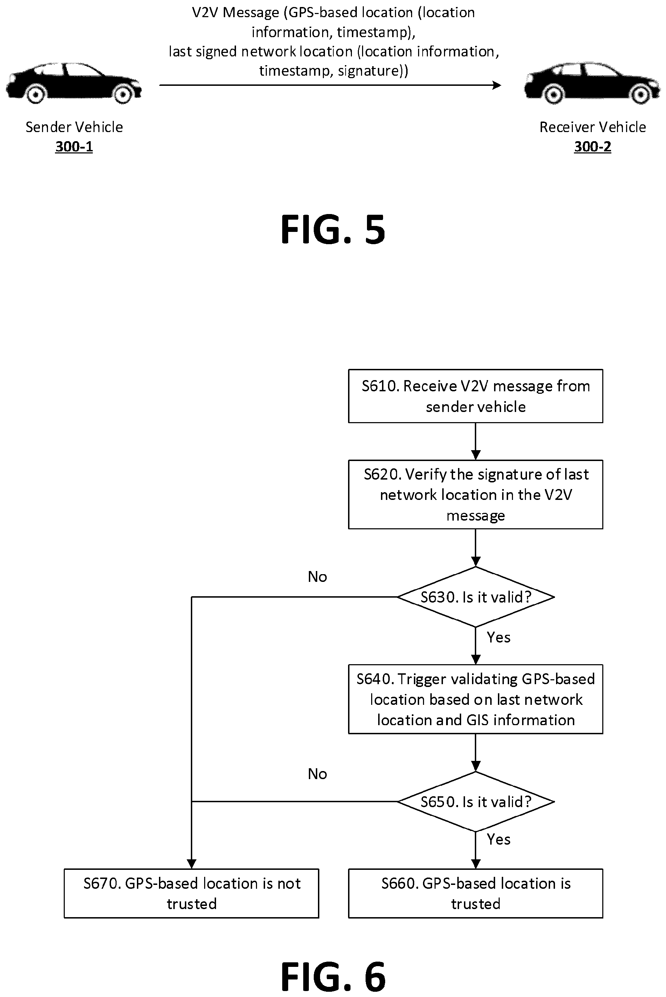

Further, at step S460, the sender vehicle 300-1 may also send one or more V2V messages to the receiver vehicle 300-2, and the messages may comprise other location information (e.g., GPS locations) than the signed location information (or network-based location information). In some embodiments, the non-signed location information may be referred to as "updated location information" or "GPS-based location information". Please note that the term "GPS-based location information" is merely an example to indicate location information that is not signed by the device gateway 325, and therefore it may be generated based on, for example, BeiDou, GALILEO, GLONASS, or other locating technologies than GPS. At step S465, the receiver vehicle 300-2 may verify the non-signed location information by using the trusted network location information, for example, the signed location information received at step S445 and verified at step S455. In some embodiments, between two reference location information, one or more updated location information may be received by the receiver vehicle 300-2 from the sender vehicle 300-1. An exemplary procedure for verifying the non-signed location information by using the previously received signed location information may be described in detail below with reference to Fig. 6.

In V2X, a vehicle may need to report its locations at a frequency between 1 Hz (i.e., 1 message per second) to 10 Hz (i.e., 10 messages per second) for some time sensitive use cases. However, network-based location service cannot afford such high frequency of location query, while the GPS can. However, since the trusted nature of network location, a receiver vehicle (e.g., the receiver vehicle 300-2) may use the network-based location to validate the GPS locations reported by the sender vehicle (e.g., the sender vehicle 300-1), as mentioned at steps S460 and S465 shown in Fig. 4.

Fig. 5 is a diagram illustrating an exemplary V2V message according to an embodiment of the present disclosure. As shown in Fig. 5, the sender vehicle 300-1 may include two kinds of location information in a same V2V message:
- Real-time GPS-based location information and corresponding timestamp (e.g., between every 0.1 second to 1 second), or in a more general sense, non-signed location information or updated location information; and
- Last signed network-based location information and corresponding timestamp (e.g., on a minute level), or in a more general sense, signed location information or reference location information.

However, please note that the present disclosure is not limited thereto. In some other embodiments, the V2V message may comprise only one of the two kinds of location information. For example, the sender vehicle 300-1 may broadcast its signed location information periodically and may also broadcast its GPS-based location information for one or more times between the broadcasting of two consecutive, signed location information. In such a case, the receiver vehicle 300-2 may use the most recently received signed location information to verify the GPS-based location information received after that.

Upon receiving such a V2V message, the receiver vehicle 300-2 may validate the GPS-based location information by using the following procedure illustrated by Fig. 6. Fig. 6 is a flow chart illustrating an exemplary location validation procedure according to an embodiment of the present disclosure.

At step S610, the receiver vehicle 300-2 may receive a V2V message from the sender vehicle 300-1. In some embodiments, the V2V message may comprise GPS-based location information and the last network location information with a digital signature.

At step S620, the receiver vehicle 300-2 may verify the signature of the last network location, for example, as described with reference to Fig. 4. If the signature is valid at step S630 ("Yes"), the procedure may proceed to step S640. Otherwise ("No"), the receiver vehicle 300-2 may regard, at step S670, the reported GPS-based location as being untrusted.

At step S640, the receiver vehicle 300-2 may trigger the GPS-based location validation sub-procedure. The sub-procedure may comprise at least one of following operations:
a) Calculate the time difference Δt between the timestamp of the last network location information and the timestamp of the GPS-based location information.
   - If Δt is longer than a time threshold that the predefined rule requires, then the GPS-based location information may not be trusted, as indicated by "No" branch from step S650.
   - Otherwise the sub-procedure ends or continues.
b) Calculate the distance Δd between the GPS-based location and last network location. In some embodiments, Geographic Information System (GIS) information may be considered when calculating Δd, such as, road topology and speed limit.
   - - If Δd is longer than a distance threshold that the predefined rule requires, then the GPS-based location information may not be trusted, as indicated by "No" branch from step S650.
   - Otherwise the sub-procedure ends or continues.
c) Validate the possibility that the sender vehicle 300-1 drives along Δd within Δt.
   - If the possibility is high, the GPS-based location may be trusted at step S660.
   - Otherwise, GPS-based location may not be trusted at step S670.

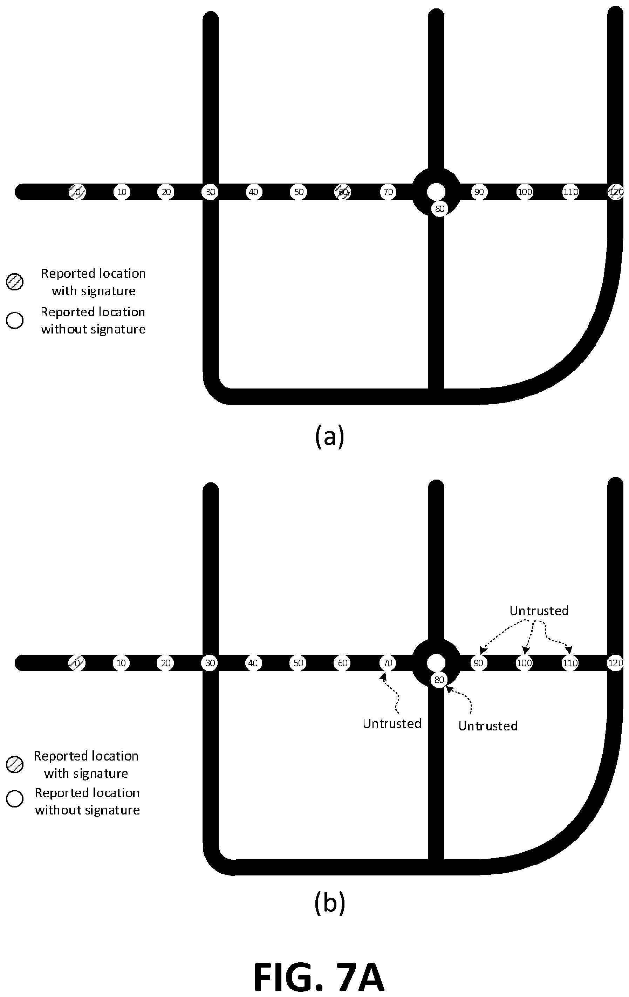

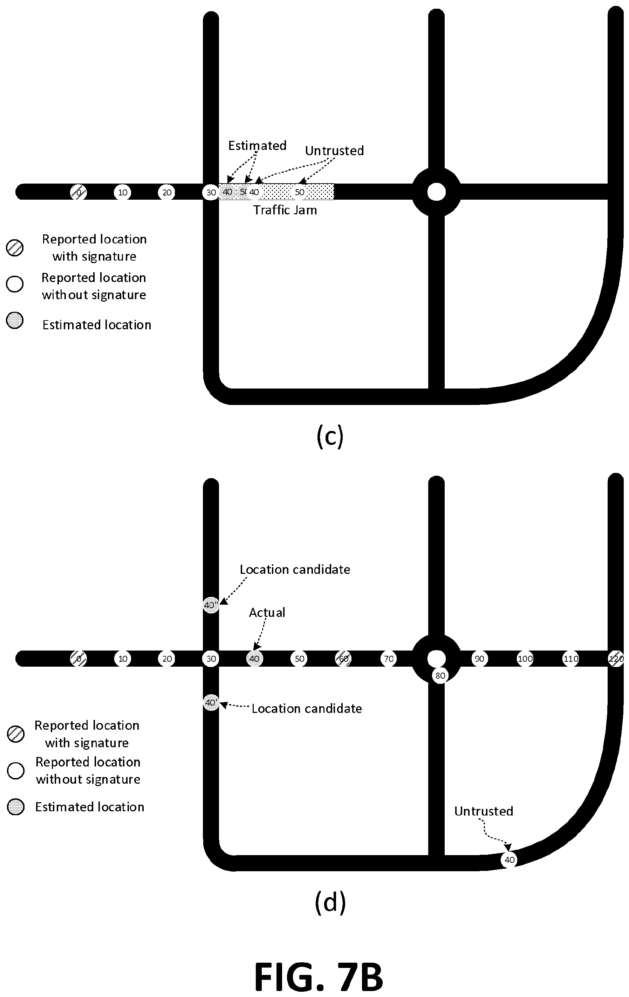

Some examples for determining whether GPS-based location is trusted or not will be described with reference to Fig. 7A and Fig. 7B.

Fig. 7A and Fig. 7B are diagrams illustrating exemplary scenarios for trust validation of location information according to an embodiment of the present disclosure. As shown in Fig. 7A and Fig. 7B, the locations of the sender vehicle 300-1 that are received by the receiver vehicle 300-2 are labeled sequentially starting from 0. Further, for simplicity and brevity of description, only labels that are multiples of 10 are shown.

Further, there are several assumptions that are generally applicable in all the scenarios shown in Fig. 7A and Fig. 7B.
- A first assumption is that: the sender vehicle 300-1 may periodically report its GPS-based locations to the receiver vehicle 300-2 in a unicast, multicast, groupcast, and/or broadcast manner every 1 second (e.g., labels 0 through 120 shown in the scenario (a) of Fig. 7A), and periodically report its signed network-based locations to the receiver vehicle 300-2 in a unicast, multicast, groupcast, and/or broadcast manner every 1 minute (e.g., labels 0, 60, and 120 shown in the scenario (a) of Fig. 7A). However, the present disclosure is not limited thereto. In some other embodiments, other configurations of the periodicities may be applicable, and/or the location information may not be periodically reported but may be reported in response to a request from the receiver vehicle 300-2.
- A second assumption is that: a time threshold for determining whether the reported location is fresh enough or not may be 60 seconds, which means any GPS-based location information may be regarded as untrusted when it is later than the signed network-based location information, which is most recently received before the GPS-based location information, by more than 60 seconds. However, the present disclosure is not limited thereto. In some other embodiments, other configurations of the time threshold may be applicable.
- A third assumption is that: in all scenarios, the sender vehicle 300-1 is travelling, or at least attempting to travel, at a constant speed along the route indicate by the labels 0 through 120 shown in the scenario (a) of Fig. 7A. However, the present disclosure is not limited thereto. In some other embodiments, the sender vehicle 300-1 may travel at a variable speed and/or in any other direction and/or along any other route.

Referring to the scenario (a) in Fig. 7A, the sender vehicle 300-1 is travelling from a location indicated by the label 0 to another location indicated by the label 120 while reporting its location information to other entities comprising the receiver vehicle 300-2. Upon reception of the signed location information indicated by any of the labels 0, 60, and 120, the receiver vehicle 300-2 may validate the location information, for example, by the step S455 shown in Fig. 4 and/or the steps S620 and S630 shown in Fig. 6. For example, when the signed location information #0 is received, the receiver vehicle 300-2 may use the public key distributed by the device gateway 325 to verify the authenticity, integrity, and non-repudiation of the location information. In the embodiment shown in the scenario (a), the receiver vehicle 300-2 may determine that these reference location information are trusted.

Upon reception of the non-signed location information indicated by any of the labels 10 through 50 and 70 through 110 (or actually any of the labels 1 through 59 and 61 through 119, some of which are not shown in Fig. 7A), the receiver vehicle 300-2 may validate the location information, for example, by the step S465 shown in Fig. 4 and/or the steps S640 and S650 shown in Fig. 6. For example, when the non-signed location information #50 is received, the receiver vehicle 300-2 may first calculate a time difference Δt between the timestamp of the last network location information (in this case, the timestamp of the signed location information #0) and the timestamp of the GPS-based location information (in this case, the timestamp of the non-signed location information #50). Therefore, the time difference Δt may be 50 seconds based on the first assumption, which is less than the threshold of 60 seconds as configured in the second assumption. After that, a distance Δd between the location #0 and the location #50 may be calculated based on GIS information that may comprise, for example, whether there is a road extending from a location indicated by the label #0 to a location indicated by the label #50, how long the segment of the road between the two locations is, etc. Then, a possibility of whether the sender vehicle 300-1 can travel the distance Δd within the time difference Δt may be determined, for example, at least based on one of a speed limit of the road, a traffic situation of the road for the time period between the two timestamps, a maximum speed of the sender vehicle 300-1 (e.g., based on its vehicle model), or the like. Referring back to the scenario (a) of Fig. 7A, it is obvious that labels #0 through #50 are equally spaced, and therefore the non-signed location information #50 may be determined to be trusted. Similarly, for other non-signed location information, they can all be successfully validated and therefore they are all trusted location information.

Referring to the scenario (b) in Fig. 7A, it is almost same as the scenario (a) from the perspective of the receiver vehicle 300-2 with the only difference that the reported location information #60 is not signed network-based location information, but a non-signed GPS-based location information. Therefore, upon reception of the non-signed location information indicated by any of the labels #70 through #110 (or actually any of the labels #61 through #119, some of which are not shown in Fig. 7A), the receiver vehicle 300-2 may determine that their timestamps are later than that of the latest signed location information (which in this case is indicated by the label #0) by more than 60 seconds, which means the reported locations #70 through #110 (or actually the labels #61 through #119, some of which are not shown in Fig. 7A) will be determined as being untrusted, for example, as a result of "No" of step S650 shown in Fig. 6. Such a scenario may be resulted from a mismatch of the time thresholds configured at the sender vehicle 300-1 and the receiver vehicle 300-2.

Referring to the scenario (c) in Fig. 7B, it is similar to the labels #0 through #50 of the scenario (a) from the perspective of the receiver vehicle 300-2 with the difference that there is a heavy traffic jam in a road segment (i.e., the dotted area) in which the location information #40 and #50 (or actually location information #31 through #59, some of which are not shown in Fig. 7B) are reported. Therefore, upon reception of the non-signed location information indicated by any of the labels #40 and #50, the receiver vehicle 300-2 may determine that the sender vehicle 300-1 cannot be located at the locations #40 and #50 under the traffic situation for the time periods associated with the labels #40 and #50. For example, the receiver vehicle 300-2 may determine an estimated location #40 by multiplying an average speed of vehicles along the road segment with a time duration between a timestamp associated with the label #30 and the label #40. A similar calculation may be applied to estimate an estimated location #50. In this case, the receiver vehicle 300-2 may determine that the possibility that the sender vehicle 300-1 can reach its reported location #40 and #50 at times indicated by the timestamps of the labels #40 and #50 is low, and therefore the location information #40 and #50 are not trusted. However, the present disclosure is not limited thereto. In some other embodiments where the sender vehicle 300-1 is a special vehicle, such as, a fire truck, an ambulance, and/or a police car that are typically not affected or less affected by the traffic jam, the possibility may be determined as high, and the locations #40 and #50 may be trusted.

Referring to the scenario (d) in Fig. 7B, it is almost same as the scenario (a) from the perspective of the receiver vehicle 300-2 with the only difference that the location #40 is reported as a location far away from the route of the sender vehicle 300-1. Therefore, upon reception of the non-signed location information #40, the receiver vehicle 300-2 may determine that the sender vehicle 300-1 cannot be located at the locations #40 under the traffic situation for the time period associated with the label #40. For example, the distance Δd between the reported location #0 and the reported location #40 may be much longer than the sender vehicle 300-1 can travel for the time period associated with the label #40, even with its maximum speed and the best traffic situation. In this case, the receiver vehicle 300-2 may determine that the possibility is low, and therefore the location information #40 is not trusted. Since there is no reasonable explanation can be provided for such a situation, the receiver vehicle 300-2 may determine that either the sender vehicle 300-1 is intentionally sending the wrong location information, or the location information #40 is faked by another nearby device.

Further, in some embodiments, an estimated location of the sender vehicle 300-1 may be estimated by the receiver vehicle 300-2, for example, based on a speed/direction/route predicted from the previous trusted locations (e.g., the locations #1 through #4). Further, when more than one location candidate are determined, the estimated location of the sender vehicle 300-1 may also be determined from the more than one location candidate, as shown in the scenario (d), for example, based on subsequently reported trusted locations (e.g., one or more of the locations #50 through #120). As shown in the scenario (d) of Fig. 7B, an actual or best guessed or estimated location may be determined from three location candidates, for example, based on the reported locations #50 through #120.

With the solution proposed in the above embodiments, a vehicle can validate the trust of other location information (e.g., GPS location). Further, the complexity of detecting location spoofing for V2V communication may be significantly lowered such that V2X safety can be improved. Furthermore, some embodiments of the present disclosure may reinforce the added value of CSP's network positioning service, such that the CSP's network positioning service may complement GPS and others OTT positioning solution.

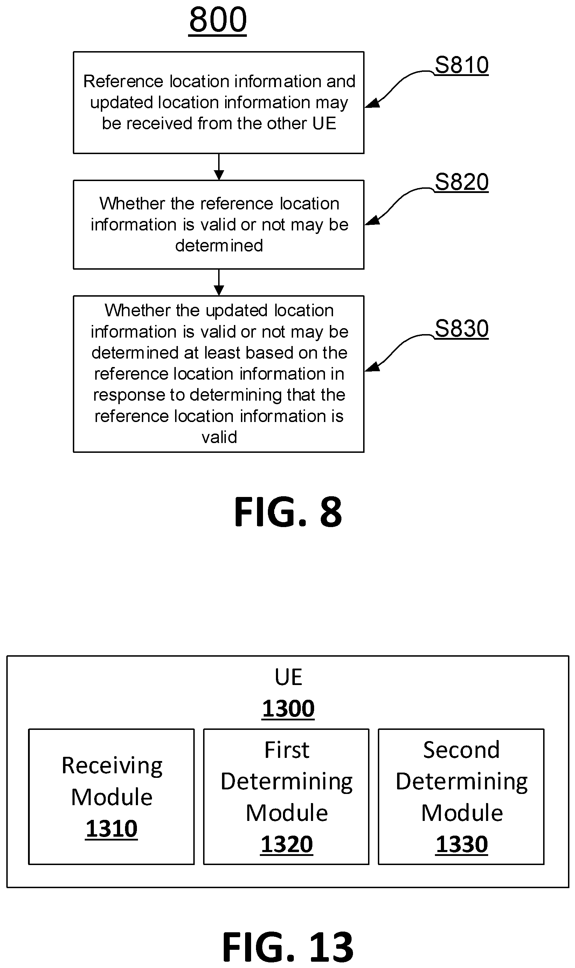

Fig. 8 is a flow chart of an exemplary method 800 at a UE for verifying location information from another UE according to an embodiment of the present disclosure. The method 800 may be performed at a UE (e.g., the UE 300-2 shown in Fig. 3). The method 800 may comprise step S810, S820, and Step S830. However, the present disclosure is not limited thereto. In some other embodiments, the method 800 may comprise more steps, less steps, different steps, or any combination thereof. Further the steps of the method 800 may be performed in a different order than that described herein. Further, in some embodiments, a step in the method 800 may be split into multiple sub-steps and performed by different entities, and/or multiple steps in the method 800 may be combined into a single step.

The method 800 may begin at step S810 where reference location information and updated location information may be received from the other UE.

At step S820, whether the reference location information is valid or not may be determined.

At step S830, whether the updated location information is valid or not may be determined at least based on the reference location information in response to determining that the reference location information is valid.

In some embodiments, the reference location information may be signed by a first network node, and the updated location information may not be signed by the first network node. In some embodiments, the reference location information and the updated location information may be received separately. In some embodiments, for each of the reference location information, more than one updated location information may be received. In some embodiments, the updated location information may have a later timestamp than that of the reference location information. In some embodiments, the step of determining whether the updated location information is valid or not may comprise: determining a time difference between a first timestamp of the reference location information and a second timestamp of the updated location information; and determining that the updated location information is invalid in response to determining that the time difference is greater than or equal to a time threshold that is predetermined or configured.

In some embodiments, the step of determining whether the updated location information is valid or not may comprise: determining a distance between a first location indicated by the reference location information and a second location indicated by the updated location information; determining a possibility that the other UE can travel the distance within a time difference between a first timestamp of the reference location information and a second timestamp of the updated location information; and determining whether the updated location information is valid or not at least based on the determined possibility. In some embodiments, the step of determining the distance may comprise: determining the distance between the first location and the second location at least based on geographic information and/or traffic information. In some embodiments, the step of determining the possibility may comprise: determining the possibility at least based on at least one of: geographic information, traffic information, and the other UE's capability. In some embodiments, the step of determining the possibility may comprise: determining whether the other UE can travel from the first location to the second location along a road therebetween at its maximum speed corresponding to a vehicle model of the other UE under a road condition corresponding to a time period between the first and second timestamps.

In some embodiments, the method 800 may further comprise at least one of: determining that the updated location information is valid in response to determining that the possibility is higher than or equal to a threshold; and determining that the updated location information is invalid in response to determining that the possibility is lower than a threshold. In some embodiments, before the step of determining whether the reference location information is valid or not, the method 800 may further comprise: verifying a public key, which is associated with a first network node that signs the reference location information, with a CA that issues, to the first network node, a certificate comprising the public key. In some embodiments, after the public key is verified to be a valid public key issued to the first network node, the step of determining whether the reference location information is valid or not may comprise: determining whether the reference location information is valid or not by using the public key to verify a signature of the reference location information. In some embodiments, at least one of the UE and the other UE may be a vehicle. In some embodiments, the updated location information may be real-time GPS-based location information. In some embodiments, the UE may be communicated with the other UE via V2V signaling.

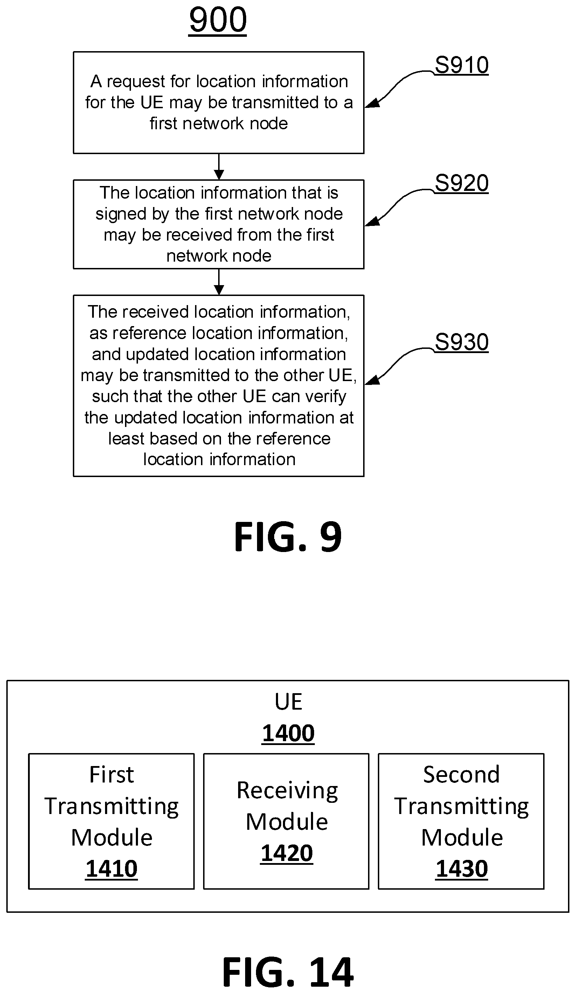

Fig. 9 is a flow chart of an exemplary method 900 at a UE for providing another UE with trusted location information according to an embodiment of the present disclosure. The method 900 may be performed at a UE (e.g., the UE 300-1 shown in Fig. 3). The method 900 may comprise step S910, S920, and Step S930. However, the present disclosure is not limited thereto. In some other embodiments, the method 900 may comprise more steps, less steps, different steps, or any combination thereof. Further the steps of the method 900 may be performed in a different order than that described herein. Further, in some embodiments, a step in the method 900 may be split into multiple sub-steps and performed by different entities, and/or multiple steps in the method 900 may be combined into a single step.

The method 900 may begin at step S910 where a request for location information for the UE may be transmitted to a first network node.

At step S920, the location information that is signed by the first network node may be received from the first network node.

At step S930, the received location information, as reference location information, and updated location information may be transmitted to the other UE, such that the other UE can verify the updated location information at least based on the reference location information.

In some embodiments, the updated location information may not be signed by the first network node. In some embodiments, the reference location information and the updated location information may be transmitted separately. In some embodiments, for each of the reference location information, more than one updated location information may be transmitted. In some embodiments, the updated location information may have a later timestamp than that of the reference location information. In some embodiments, at least one of the UE and the other UE may be a vehicle. In some embodiments, the updated location information may be real-time GPS-based location information. In some embodiments, the UE may be communicated with the other UE via V2V signaling.

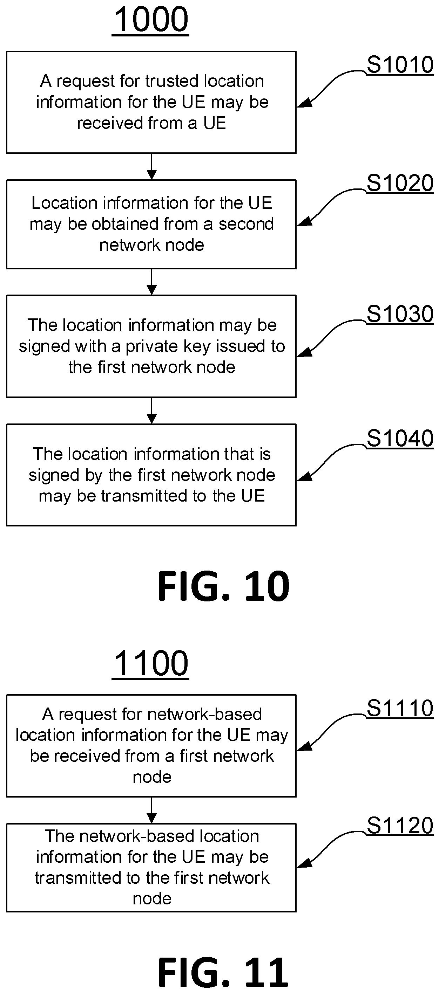

Fig. 10 is a flow chart of an exemplary method 1000 at a first network node for providing trusted location information according to an embodiment of the present disclosure. The method 1000 may be performed at a network node (e.g., the device gateway 325 shown in Fig. 3). The method 1000 may comprise step S1010, S1020, S1030, and Step S1040. However, the present disclosure is not limited thereto. In some other embodiments, the method 1000 may comprise more steps, less steps, different steps, or any combination thereof. Further the steps of the method 1000 may be performed in a different order than that described herein. Further, in some embodiments, a step in the method 1000 may be split into multiple sub-steps and performed by different entities, and/or multiple steps in the method 1000 may be combined into a single step.

The method 1000 may begin at step S1010 where a request for trusted location information for the UE may be received from a UE.

At step S1020, location information for the UE may be obtained from a second network node.

At step S1030, the location information may be signed with a private key issued to the first network node.

At step S1040, the location information that is signed by the first network node may be transmitted to the UE.

In some embodiments, after the step of receiving the request and before the step of obtaining the location information, the method 1000 may further comprise at least one of: authenticating the UE at least based on a network identity of the UE; and/or authorizing the request at least based on a profile of the UE. In some embodiments, before the step of signing the location information with a private key issued to the first network node, the method 1000 may further comprise: transmitting, to a CA, a request for issuing a certificate to the first network node; and receiving, from the CA, the certificate comprising the private key and a corresponding public key. In some embodiments, the method 1000 may further comprise: distributing the public key to other devices directly or indirectly, such that a signature generated by the first network node using the private key can be verified by other devices by using the public key.

In some embodiments, the step of obtaining the location information for the UE from the second network node may comprise: transmitting, to the second network node, a request for network-based location information for the UE; and receiving, from the second network node, the network-based location information for the UE. In some embodiments, the second network node may be an SCEF/NEF. In some embodiments, the request for network-based location information for the UE may be a message for invoking an SCEF/NEF Monitoring Events API, and may comprise at least one of: an ID of the first network node; an ID of the UE; and a monitoring type indicator indicating that the location of the UE is to be monitored. In some embodiments, the first network node may be located outside of a trusted domain of a CSP to which the second network node belongs.

Fig. 11 is a flow chart of an exemplary method 1100 at a second network node for exposing location information for a UE according to an embodiment of the present disclosure. The method 1100 may be performed at a network node (e.g., the SCEF/NEF 345 shown in Fig. 3). The method 1100 may comprise step S1110 and Step S1120. However, the present disclosure is not limited thereto. In some other embodiments, the method 1100 may comprise more steps, less steps, different steps, or any combination thereof. Further the steps of the method 1100 may be performed in a different order than that described herein. Further, in some embodiments, a step in the method 1100 may be split into multiple sub-steps and performed by different entities, and/or multiple steps in the method 1100 may be combined into a single step.

The method 1100 may begin at step S1110 where a request for network-based location information for the UE may be received from a first network node.

At step S1120, the network-based location information for the UE may be transmitted to the first network node.

In some embodiments, the second network node may be an SCEF/NEF. In some embodiments, the request for network-based location information for the UE may be a message for invoking an SCEF/NEF Monitoring Events API, and may comprise at least one of: an ID of the first network node; an ID of the UE; and a monitoring type indicator indicating that the location of the UE is to be monitored. In some embodiments, the first network node may be located outside of a trusted domain of a CSP to which the second network node belongs.

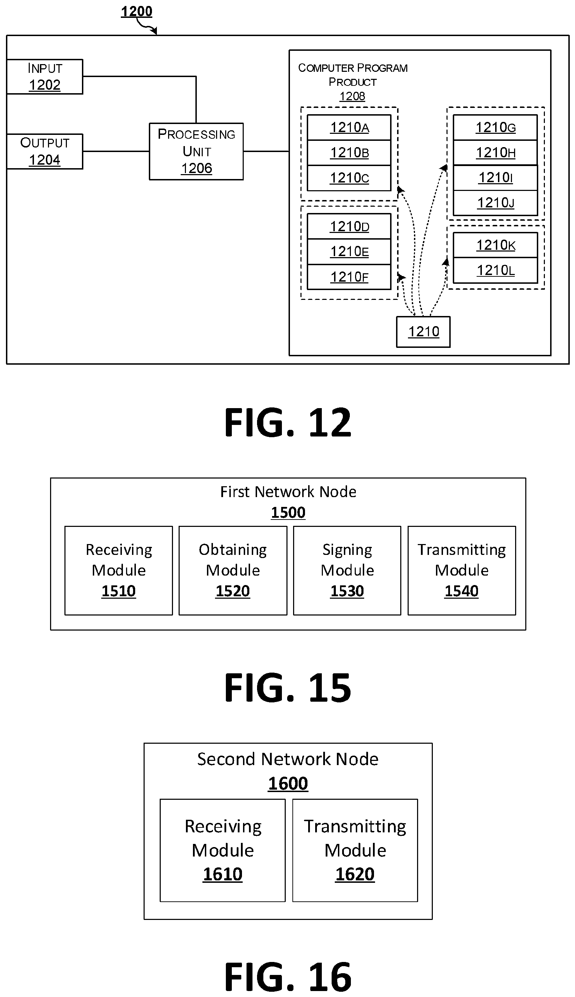

Fig. 12 schematically shows an embodiment of an arrangement which may be used in a UE and/or a network node according to an embodiment of the present disclosure. Comprised in the arrangement 1200 are a processing unit 1206, e.g., with a Digital Signal Processor (DSP) or a Central Processing Unit (CPU). The processing unit 1206 may be a single unit or a plurality of units to perform different actions of procedures described herein. The arrangement 1200 may also comprise an input unit 1202 for receiving signals from other entities, and an output unit 1204 for providing signal(s) to other entities. The input unit 1202 and the output unit 1204 may be arranged as an integrated entity or as separate entities.

Furthermore, the arrangement 1200 may comprise at least one computer program product 1208 in the form of a non-volatile or volatile memory, e.g., an Electrically Erasable Programmable Read-Only Memory (EEPROM), a flash memory and/or a hard drive. The computer program product 1208 comprises a computer program 1210, which comprises code/computer readable instructions, which when executed by the processing unit 1206 in the arrangement 1200 causes the arrangement 1200 and/or the UEs and/or the network nodes in which it is comprised to perform the actions, e.g., of the procedure described earlier in conjunction with Fig. 4, Fig. 6, Fig. 8 to Fig. 11 or any other variant.

The computer program 1210 may be configured as a computer program code structured in computer program modules 1210A - 1210C. Hence, in an exemplifying embodiment when the arrangement 1200 is used in a UE, the code in the computer program of the arrangement 1200 includes: a module 1210A configured to receive, from the other UE, reference location information and updated location information; a module 1210B configured to determine whether the reference location information is valid or not; a module 1210C configured to determine whether the updated location information is valid or not at least based on the reference location information in response to determining that the reference location information is valid.

Additionally or alternatively, the computer program 1210 may be configured as a computer program code structured in computer program modules 1210D - 1210F. Hence, in an exemplifying embodiment when the arrangement 1200 is used in a UE, the code in the computer program of the arrangement 1200 includes: a module 1210D configured to transmit, to a first network node, a request for location information for the UE; a module 1210E configured to receive, from the first network node, the location information that is signed by the first network node; and a module 1210F configured to transmit, to the other UE, the received location information, as reference location information, and updated location information, such that the other UE can verify the updated location information at least based on the reference location information.

Additionally or alternatively, the computer program 1210 may be configured as a computer program code structured in computer program modules 1210G - 1210J. Hence, in an exemplifying embodiment when the arrangement 1200 is used in a first network node, the code in the computer program of the arrangement 1200 includes: a module 1210G configured to receive, from a UE, a request for trusted location information for the UE; an module 1210H configured to obtain location information for the UE from a second network node; a signing module 1210I configured to sign the location information with a private key issued to the first network node; and a module 1210J configured to transmit, to the UE, the location information that is signed by the first network node.

Additionally or alternatively, the computer program 1210 may be configured as a computer program code structured in computer program modules 1210K - 1210L. Hence, in an exemplifying embodiment when the arrangement 1200 is used in a second network node, the code in the computer program of the arrangement 1200 includes: a module 1210K configured to receive, from a first network node, a request for network-based location information for the UE; and a module 1210L configured to transmit, to the first network node, the network-based location information for the UE.

The computer program modules could essentially perform the actions of the flow illustrated in Fig. 4, Fig. 6, Fig. 8 to Fig. 11, to emulate the UEs and/or the network nodes. In other words, when the different computer program modules are executed in the processing unit 1206, they may correspond to different modules in the sender UE, the receiver UE, the first network node, and/or the second network node.

Although the code means in the embodiments disclosed above in conjunction with Fig. 12 are implemented as computer program modules which when executed in the processing unit causes the arrangement to perform the actions described above in conjunction with the figures mentioned above, at least one of the code means may in alternative embodiments be implemented at least partly as hardware circuits.

The processor may be a single CPU (Central processing unit), but could also comprise two or more processing units. For example, the processor may include general purpose microprocessors; instruction set processors and/or related chips sets and/or special purpose microprocessors such as Application Specific Integrated Circuit (ASICs). The processor may also comprise board memory for caching purposes. The computer program may be carried by a computer program product connected to the processor. The computer program product may comprise a computer readable medium on which the computer program is stored. For example, the computer program product may be a flash memory, a Random-access memory (RAM), a Read-Only Memory (ROM), or an EEPROM, and the computer program modules described above could in alternative embodiments be distributed on different computer program products in the form of memories within the UE.

Correspondingly to the method 800 as described above, an exemplary UE is provided. Fig. 13 is a block diagram of an exemplary UE 1300 according to an embodiment of the present disclosure. The UE 1300 may be, e.g., the UE 300-2 in some embodiments.

The UE 1300 may be configured to perform the method 800 as described above in connection with Fig. 8. As shown in Fig. 13, the UE 1300 may comprise a receiving module 1310 configured to receive, from the other UE, reference location information and updated location information; a first determining module 1320 configured to determine whether the reference location information is valid or not; a second determining module 1330 configured to determine whether the updated location information is valid or not at least based on the reference location information in response to determining that the reference location information is valid.

The above modules 1310, 1320, and/or 1330 may be implemented as a pure hardware solution or as a combination of software and hardware, e.g., by one or more of: a processor or a micro-processor and adequate software and memory for storing of the software, a Programmable Logic Device (PLD) or other electronic component(s) or processing circuitry configured to perform the actions described above, and illustrated, e.g., in Fig. 8. Further, the UE 1300 may comprise one or more further modules, each of which may perform any of the steps of the method 800 described with reference to Fig. 8.

Correspondingly to the method 900 as described above, an exemplary UE is provided. Fig. 14 is a block diagram of an exemplary UE 1400 according to an embodiment of the present disclosure. The UE 1400 may be, e.g., the UE 300-1 in some embodiments.

The UE 1400 may be configured to perform the method 900 as described above in connection with Fig. 9. As shown in Fig. 14, the UE 1400 may comprise a first transmitting module 1410 configured to transmit, to a first network node, a request for location information for the UE; a receiving module 1420 configured to receive, from the first network node, the location information that is signed by the first network node; and a second transmitting module 1430 configured to transmit, to the other UE, the received location information, as reference location information, and updated location information, such that the other UE can verify the updated location information at least based on the reference location information.

The above modules 1410, 1420, and/or 1430 may be implemented as a pure hardware solution or as a combination of software and hardware, e.g., by one or more of: a processor or a micro-processor and adequate software and memory for storing of the software, a PLD or other electronic component(s) or processing circuitry configured to perform the actions described above, and illustrated, e.g., in Fig. 9. Further, the UE 1400 may comprise one or more further modules, each of which may perform any of the steps of the method 900 described with reference to Fig. 9.

Correspondingly to the method 1000 as described above, an exemplary first network node is provided. Fig. 15 is a block diagram of an exemplary first network node 1500 according to an embodiment of the present disclosure. The first network node 1500 may be, e.g., the device gateway 325 in some embodiments.

The first network node 1500 may be configured to perform the method 1000 as described above in connection with Fig. 10. As shown in Fig. 15, the first network node 1500 may comprise a receiving module 1510 configured to receive, from a UE, a request for trusted location information for the UE; an obtaining module 1520 configured to obtain location information for the UE from a second network node; a signing module 1530 configured to sign the location information with a private key issued to the first network node; and a transmitting module 1540 configured to transmit, to the UE, the location information that is signed by the first network node.

The above modules 1510, 1520, 1530, and/or 1540 may be implemented as a pure hardware solution or as a combination of software and hardware, e.g., by one or more of: a processor or a micro-processor and adequate software and memory for storing of the software, a PLD or other electronic component(s) or processing circuitry configured to perform the actions described above, and illustrated, e.g., in Fig. 10. Further, the first network node 1500 may comprise one or more further modules, each of which may perform any of the steps of the method 1000 described with reference to Fig. 10.

Correspondingly to the method 1100 as described above, an exemplary second network node is provided. Fig. 16 is a block diagram of an exemplary second network node 1600 according to an embodiment of the present disclosure. The second network node 1600 may be, e.g., the SCEF/NEF 345 in some embodiments.

The second network node 1600 may be configured to perform the method 1100 as described above in connection with Fig. 11. As shown in Fig. 16, the second network node 1600 may comprise a receiving module 1610 configured to receive, from a first network node, a request for network-based location information for the UE; and a transmitting module 1620 configured to transmit, to the first network node, the network-based location information for the UE.

The above modules 1610 and/or 1620 may be implemented as a pure hardware solution or as a combination of software and hardware, e.g., by one or more of: a processor or a micro-processor and adequate software and memory for storing of the software, a PLD or other electronic component(s) or processing circuitry configured to perform the actions described above, and illustrated, e.g., in Fig. 11. Further, the second network node 1600 may comprise one or more further modules, each of which may perform any of the steps of the method 1100 described with reference to Fig. 11.

The present disclosure is described above with reference to the embodiments thereof. However, those embodiments are provided just for illustrative purpose, rather than limiting the present disclosure. The scope of the disclosure is defined by the appended claims.

| **Abbreviation** | **Explanation** |
|---|---|
| ADAS | Advanced Driver Assistance System |
| CSP | Communication Service Provider |
| C-V2X | Cellular Vehicle-to-Everything |
| GPS | Global Positioning System |
| NEF | Network Exposure Function |
| OTT | Over The Top |
| PKI | Public Key Infrastructure |
| SCEF | Service Capability Exposure Function |
| V2I | Vehicle-to-Infrastructure |
| V2V | Vehicle-to-Vehicle |
| V2X | Vehicle-to-Everything |

## Claims

1. A method (800) at a user equipment (300-2) for verifying location information from another user equipment (300-1), the method (800) comprising:
receiving (S445, S460, S610, S810), from the other user equipment (300-1), reference location information that is signed by a first network node (325) and updated location information that is not signed by the first network node (325);
determining (S455, S620/S630, S820) whether the reference location information is valid or not; and
determining (S465, S640/S650, S830) whether the updated location information is valid or not at least based on the reference location information in response to determining that the reference location information is valid, wherein the step of determining whether the updated location information is valid or not comprises:
- determining a time difference between a first timestamp of the reference location information and a second timestamp of the updated location information; and
- determining that the updated location information is invalid in response to determining that the time difference is greater than or equal to a time threshold that is predetermined or configured.

2. The method (800) of claim 1, wherein the reference location information and the updated location information are received separately; and/or
wherein the updated location information is real-time Global Positioning System-based location information.

3. The method (800) of any of claims 1 to 2, wherein for each of the reference location information, more than one updated location information is received; and/or
wherein the updated location information has a later timestamp than that of the reference location information.

4. The method (800) of any of claims 1 to 3, wherein the step of determining (S465, S640/S650, S830) whether the updated location information is valid or not comprises:
determining a distance between a first location indicated by the reference location information and a second location indicated by the updated location information; determining a possibility that the other user equipment can travel the distance within a time difference between a first timestamp of the reference location information and a second timestamp of the updated location information; and
determining whether the updated location information is valid or not at least based on the determined possibility.

5. The method (800) of claim 4, wherein the step of determining the distance comprises determining the distance between the first location and the second location at least based on geographic information and/or traffic information; and/or
wherein the step of determining the possibility comprises determining the possibility at least based on at least one of: geographic information, traffic information, and the other user equipment's capability; and/or
wherein the step of determining the possibility comprises determining whether the other user equipment (300-1) can travel from the first location to the second location along a road therebetween at its maximum speed corresponding to a vehicle model of the other user equipment (300-1) under a road condition corresponding to a time period between the first and second timestamps.

6. The method (800) of any of claims 4 to 5, further comprising at least one of:
determining that the updated location information is valid in response to determining that the possibility is higher than or equal to a threshold; and
determining that the updated location information is invalid in response to determining that the possibility is lower than a threshold.

7. The method (800) of any of claims 1 to 6, wherein before the step of determining (S455, S620/S630, S820) whether the reference location information is valid or not, the method (800) further comprises:
verifying a public key, which is associated with a first network node (325) that signs the reference location information, with a certificate authority (360) that issues, to the first network node (325), a certificate comprising the public key.

8. The method (800) of claim 7, wherein after the public key is verified to be a valid public key issued to the first network node (325), the step of determining (S455, S620/S630, S820) whether the reference location information is valid or not comprises:
determining whether the reference location information is valid or not by using the public key to verify a signature of the reference location information.

9. The method (800) of any of claims 1 to 8, wherein at least one of the user equipment (300-2) and the other user equipment (300-1) is a vehicle; and/or wherein the user equipment (300-2) communicates with the other user equipment (300-1) via vehicle-to-vehicle signaling.

10. A user equipment (300-2, 1200, 1300), comprising:
a processor (1206); and
a memory (1208) storing instructions which, when executed by the processor (1206), cause the processor (1206) to perform the method (800) of any of claims 1 to 9.

11. A method (900) at a user equipment (300-1) for providing another user equipment (300-2) with trusted location information, the method (900) comprising:
transmitting (S415, S910), to a first network node (325), a request for location information for the user equipment (300-1);
receiving (S440, S920), from the first network node (325), the location information that is signed by the first network node (325); and
transmitting (S445, S460, S610, S930), to the other user equipment (300-2), the received location information as reference location information that is signed by the first network node (325), and updated location information that is not signed by the first network node (325), such that the other user equipment (300-2) can verify the updated location information at least based on the reference location information,
wherein the transmitting (S445, S460, S610, S930) triggers the other user equipment (300-2)
- to determine a time difference between a first timestamp of the reference location information and a second timestamp of the updated location information and
- to determine that the updated location information is invalid in response to determining that the time difference is greater than or equal to a time threshold that is predetermined or configured.

12. The method (900) of claim 11, wherein the reference location information and the updated location information are transmitted separately; and/or
wherein the updated location information is real-time Global Positioning System-based location information.

13. The method (900) of claim 11 or 12, wherein for each of the reference location information, more than one updated location information is transmitted; and/or
wherein the updated location information has a later timestamp than that of the reference location information.

14. The method (900) of any of claims 11 to 13, wherein at least one of the user equipment (300-1) and the other user equipment (300-2) is a vehicle; and/or wherein the user equipment (300-1) communicates with the other user equipment (300-2) via vehicle-to-vehicle signaling.

15. A user equipment (300-1, 1200, 1400), comprising:
a processor (1206); and
a memory (1208) storing instructions which, when executed by the processor (1206), cause the processor (1206) to perform the method (900) of any of claims 11 to 14.

## Patentansprüche

1. Verfahren (800) an einer Benutzereinrichtung (300-2) zur Verifizierung von Standortinformationen von einer anderen Benutzereinrichtung (300-1), wobei das Verfahren (800) Folgendes umfasst:
Empfangen (S445, S460, S610, S810) von Referenzstandortinformationen, die von einem ersten Netzwerkknoten (325) signiert sind, und aktualisierten Standortinformationen, die nicht von dem ersten Netzwerkknoten (325) signiert sind, von der anderen Benutzereinrichtung (300-1);
Bestimmen (S455, S620/S630, S820), ob die Referenzstandortinformationen gültig sind oder nicht; und
Bestimmen (S465, S640/S650, S830), ob die aktualisierten Standortinformationen gültig sind oder nicht, basierend auf den Referenzstandortinformationen in Reaktion auf ein Bestimmen, dass die Referenzstandortinformationen gültig sind, wobei der Schritt des Bestimmens, ob die aktualisierten Standortinformationen gültig sind oder nicht, Folgendes umfasst:
- Bestimmen einer Zeitdifferenz zwischen einem ersten Zeitstempel der Referenzstandortinformationen und einem zweiten Zeitstempel der aktualisierten Standortinformationen; und
- Bestimmen, dass die aktualisierten Standortinformationen ungültig sind, in Reaktion auf ein Bestimmen, dass die Zeitdifferenz größer oder gleich einem Zeitschwellenwert ist, der bestimmt wird oder konfiguriert ist.

2. Verfahren (800) nach Anspruch 1, wobei die Referenzstandortinformationen und die aktualisierten Standortinformationen getrennt empfangen werden; und/oder
wobei die aktualisierten Standortinformationen auf dem globalen Positionsbestimmungssystem basierende Echtzeit-Standortinformationen sind.

3. Verfahren (800) nach einem der Ansprüche 1 bis 2, wobei für jede der Referenzstandortinformationen mehr als eine aktualisierte Standortinformation empfangen wird; und/oder
wobei die aktualisierten Standortinformationen einen Zeitstempel aufweisen, der später ist als der der Referenzstandortinformationen.

4. Verfahren (800) nach einem der Ansprüche 1 bis 3, wobei der Schritt des Bestimmens (S465, S640/S650, S830), ob die aktualisierten Standortinformationen gültig sind oder nicht, Folgendes umfasst:
Bestimmen einer Entfernung zwischen einem ersten Standort, der durch die Referenzstandortinformationen angegeben wird, und einem zweiten Standort, der durch die aktualisierten Standortinformationen angegeben wird;
Bestimmen einer Möglichkeit, dass die andere Benutzereinrichtung die Entfernung innerhalb einer Zeitdifferenz zwischen einem ersten Zeitstempel der Referenzstandortinformationen und einem zweiten Zeitstempel der aktualisierten Standortinformationen zurücklegen kann; und
Bestimmen, ob die aktualisierten Standortinformationen gültig sind oder nicht, zumindest basierend auf der bestimmten Möglichkeit.

5. Verfahren (800) nach Anspruch 4, wobei der Schritt des Bestimmens der Entfernung Bestimmen der Entfernung zwischen dem ersten Standort und dem zweiten Standort zumindest basierend auf geografischen Informationen und/oder Verkehrsinformationen umfasst; und/oder
wobei der Schritt des Bestimmens der Möglichkeit Bestimmen der Möglichkeit zumindest basierend auf einem von Folgenden umfasst: geografischen Informationen, Verkehrsinformationen und der Fähigkeit der anderen Benutzereinrichtung; und/oder
wobei der Schritt des Bestimmens der Möglichkeit Bestimmen umfasst, ob sich die andere Benutzereinrichtung (300-1) vom ersten Standort zum zweiten Standort entlang einer Straße dazwischen mit ihrer maximalen Geschwindigkeit, die einem Fahrzeugmodell der anderen Benutzereinrichtung (300-1) entspricht, unter Straßenbedingungen bewegen kann, die einer Zeitdauer zwischen dem ersten und dem zweiten Zeitstempel entsprechen.

6. Verfahren (800) nach einem der Ansprüche 4 bis 5, ferner umfassend mindestens eines von Folgendem:
Bestimmen, dass die aktualisierten Standortinformationen gültig sind, in Reaktion auf ein Bestimmen, dass die Möglichkeit höher oder gleich einem Schwellenwert ist; und
Bestimmen, dass die aktualisierten Standortinformationen ungültig sind, in Reaktion auf ein Bestimmen, dass die Möglichkeit geringer als ein Schwellenwert ist.

7. Verfahren (800) nach einem der Ansprüche 1 bis 6, wobei das Verfahren (800) vor dem Schritt des Bestimmens (S455, S620/S630, S820), ob die Referenzstandortinformationen gültig sind oder nicht, ferner Folgendes umfasst:
Verifizieren eines öffentlichen Schlüssels, der mit einem ersten Netzwerkknoten (325) assoziiert ist, der die Referenzstandortinformationen signiert, bei einer Zertifizierungsstelle (360), die dem ersten Netzwerkknoten (325) ein Zertifikat ausstellt, das den öffentlichen Schlüssel umfasst.

8. Verfahren (800) nach Anspruch 7, wobei der Schritt des Bestimmens (S455, S620/S630, S820), ob die Referenzstandortinformationen gültig sind oder nicht, nach dem Verifizieren, dass der dem ersten Netzwerkknoten (325) ausgestellte öffentliche Schlüssel ein gültiger öffentlicher Schlüssel ist, Folgendes umfasst:
Bestimmen, ob die Referenzstandortinformationen gültig sind oder nicht, durch Verwenden des öffentlichen Schlüssels zum Verifizieren einer Signatur der Referenzstandortinformationen.

9. Verfahren (800) nach einem der Ansprüche 1 bis 8, wobei mindestens eine von der Benutzereinrichtung (300-2) und der anderen Benutzereinrichtung (300-1) ein Fahrzeug ist; und/oder
wobei die Benutzereinrichtung (300-2) mit der anderen Benutzereinrichtung (300-1) über Fahrzeug-zu-Fahrzeug-Signalisierung kommuniziert.

10. Benutzereinrichtung (300-2, 1200, 1300), umfassend:
einen Prozessor (1206); und
einen Speicher (1208), der Anweisungen speichert, die bei Ausführung durch den Prozessor (1206) den Prozessor (1206) zum Durchführen des Verfahrens (800) nach einem der vorhergehenden Ansprüche 1 bis 9 veranlassen.

11. Verfahren (900) an einer Benutzereinrichtung (300-1) zur Bereitstellung von vertrauenswürdigen Standortinformationen für eine andere Benutzereinrichtung (300-2), wobei das Verfahren (900) Folgendes umfasst:
Senden (S415, S910) einer Anforderung für Standortinformationen für die Benutzereinrichtung (300-1) an einen ersten Netzwerkknoten (325);
Empfangen (S440, S920) der Standortinformationen, die von dem ersten Netzwerkknoten (325) signiert sind, von dem ersten Netzwerkknoten (325); und
Senden (S445, S460, S610, S930) der empfangenen Standortinformationen als Referenzstandortinformationen, die von dem ersten Netzwerkknoten (325) signiert sind, und aktualisierter Standortinformationen, die nicht von dem ersten Netzwerkknoten (325) signiert sind, an die andere Benutzereinrichtung (300-2), derart dass die andere Benutzereinrichtung (300-2) die aktualisierten Standortinformationen zumindest basierend auf den Referenzstandortinformationen verifizieren kann,
wobei das Senden (S445, S460, S610, S930) die andere Benutzereinrichtung (300-2) veranlasst,
- eine Zeitdifferenz zwischen einem ersten Zeitstempel der Referenzstandortinformationen und einem zweiten Zeitstempel der aktualisierten Standortinformationen zu bestimmen; und
- in Reaktion auf ein Bestimmen, dass die Zeitdifferenz größer oder gleich einem Zeitschwellenwert ist, der bestimmt wird oder konfiguriert ist, zu bestimmen, dass die aktualisierten Standortinformationen ungültig sind.

12. Verfahren (900) nach Anspruch 11, wobei die Referenzstandortinformationen und die aktualisierten Standortinformationen getrennt gesendet werden; und/oder
wobei die aktualisierten Standortinformationen auf dem globalen Positionsbestimmungssystem basierende Echtzeit-Standortinformationen sind.

13. Verfahren (900) nach Anspruch 11 oder 12, wobei für jede der Referenzstandortinformationen mehr als eine aktualisierte Standortinformation gesendet wird; und/oder
wobei die aktualisierten Standortinformationen einen Zeitstempel aufweisen, der später ist als der der Referenzstandortinformationen.

14. Verfahren (900) nach einem der Ansprüche 11 bis 13, wobei mindestens eine von der Benutzereinrichtung (300-1) und der anderen Benutzereinrichtung (300-2) ein Fahrzeug ist; und/oder
wobei die Benutzereinrichtung (300-1) mit der anderen Benutzereinrichtung (300-2) über Fahrzeug-zu-Fahrzeug-Signalisierung kommuniziert.

15. Benutzereinrichtung (300-1, 1200, 1400), umfassend:
einen Prozessor (1206); und
einen Speicher (1208), der Anweisungen speichert, die bei Ausführung durch den Prozessor (1206) den Prozessor (1206) zum Durchführen des Verfahrens (900) nach einem der vorhergehenden Ansprüche 11 bis 14 veranlassen.

## Revendications

1. Procédé (800), au niveau d'un équipement utilisateur (300-2), pour vérifier des informations d'emplacement d'un autre équipement utilisateur (300-1), le procédé (800) comprenant :
la réception (S445, S460, S610, S810), depuis l'autre équipement utilisateur (300-1), d'informations d'emplacement de références qui sont signées par un premier nœud de réseau (325) et d'informations d'emplacement mises à jour qui ne sont pas signées par le premier nœud de réseau (325) ;
la détermination (S455, S620/S630, S820) si les informations d'emplacement de référence sont valides ou non ; et
la détermination (S465, S640/S650, S830) si les informations d'emplacement mises à jour sont valides ou non au moins sur la base des informations d'emplacement de référence en réponse à la détermination que les informations d'emplacement de référence sont valides, dans lequel l'étape de détermination si les informations d'emplacement mises à jour sont valides ou non comprend :
- la détermination d'une différence de temps entre un premier horodatage des informations d'emplacement de référence et un deuxième horodatage des informations d'emplacement mises à jour ; et
- la détermination que les informations d'emplacement mises à jour sont invalides en réponse à la détermination que la différence de temps est supérieure ou égale à un seuil de temps qui est prédéterminé ou configuré.

2. Procédé (800) selon la revendication 1, dans lequel les informations d'emplacement de référence et les informations d'emplacement mises à jour sont reçues séparément ; et/ou
dans lequel les informations d'emplacement mises à jour sont des informations d'emplacement sur la base du système de positionnement mondial en temps réel.

3. Procédé (800) selon l'une quelconque des revendications 1 et 2, dans lequel, pour chacune des informations d'emplacement de référence, plusieurs informations d'emplacement mises à jour sont reçues ; et/ou
dans lequel les informations d'emplacement mises à jour présentent un horodatage postérieur à celui des informations d'emplacement de référence.

4. Procédé (800) selon l'une quelconque des revendications 1 à 3, dans lequel l'étape de détermination (S465, S640/S650, S830) si les informations d'emplacement mises à jour sont valides ou non comprend :
la détermination d'une distance entre un premier emplacement indiqué par les informations d'emplacement de référence et un deuxième emplacement indiqué par les informations d'emplacement mises à jour ;
la détermination d'une possibilité que l'autre équipement utilisateur puisse parcourir la distance en une différence de temps entre un premier horodatage des informations d'emplacement de référence et un deuxième horodatage des informations d'emplacement mises à jour ; et
la détermination si les informations d'emplacement mises à jour sont valides ou non au moins sur la base de la possibilité déterminée.

5. Procédé (800) selon la revendication 4, dans lequel l'étape de détermination de la distance comprend la détermination de la distance entre le premier emplacement et le deuxième emplacement au moins sur la base d'informations géographiques et/ou d'informations de circulation ; et/ou
dans lequel l'étape de détermination de la possibilité comprend la détermination de la possibilité au moins sur la base d'au moins l'une parmi : des informations géographiques, des informations de circulation et la capacité de l'autre équipement utilisateur ; et/ou dans lequel l'étape de détermination de la possibilité comprend la détermination si l'autre équipement utilisateur (300-1) peut se déplacer du premier emplacement au deuxième emplacement le long d'une route entre eux à sa vitesse maximale correspondant à un modèle de véhicule de l'autre équipement utilisateur (300-1) dans une condition de route correspondant à une période de temps entre le premier horodatage et le deuxième horodatage.

6. Procédé (800) selon l'une quelconque des revendications 4 et 5, comprenant en outre au moins l'une parmi :
la détermination que les informations d'emplacement mises à jour sont valides en réponse à la détermination que la possibilité est supérieure ou égale à un seuil ; et
la détermination que les informations d'emplacement mises à jour sont invalides en réponse à la détermination que la possibilité est inférieure à un seuil.

7. Procédé (800) selon l'une quelconque des revendications 1 à 6, dans lequel, avant l'étape de détermination (S455, S620/S630, S820) si les informations d'emplacement de référence sont valides ou non, le procédé (800) comprend en outre :
la vérification d'une clé publique, qui est associée à un premier nœud de réseau (325) qui signe les informations d'emplacement de référence, avec une autorité de certificat (360) qui émet, au premier nœud de réseau (325), un certificat comprenant la clé publique.

8. Procédé (800) selon la revendication 7, dans lequel, après la vérification que la clé publique est une clé publique valide émise au premier nœud de réseau (325), l'étape de détermination (S455, S620/S630, S820) si les informations d'emplacement de référence sont valides ou non comprend :
la détermination si les informations d'emplacement de référence sont valides ou non à l'aide de la clé publique pour vérifier une signature des informations d'emplacement de référence.

9. Procédé (800) selon l'une quelconque des revendications 1 à 8, dans lequel au moins l'un parmi l'équipement utilisateur (300-2) et l'autre équipement utilisateur (300-1) est un véhicule ; et/ou dans lequel l'équipement utilisateur (300-2) communique avec l'autre équipement utilisateur (300-1) via une signalisation de véhicule à véhicule.

10. Equipement utilisateur (300-2, 1200, 1300), comprenant :
un processeur (1206) ; et
une mémoire (1208) stockant des instructions qui, lorsqu'elles sont exécutées par le processeur (1206), amènent le processeur (1206) à réaliser le procédé (800) selon l'une quelconque des revendications 1 à 9.

11. Procédé (900), au niveau d'un équipement utilisateur (300-1), pour fournir, à un autre équipement utilisateur (300-2), des informations d'emplacement de confiance, le procédé (900) comprenant :
la transmission (S415, S910), à un premier nœud de réseau (325), d'une demande d'informations d'emplacement pour l'équipement utilisateur (300-1) ;
la réception (S440, S920), depuis le premier nœud de réseau (325), des informations d'emplacement qui sont signées par le premier nœud de réseau (325) ; et
la transmission (S445, S460, S610, S930), à l'autre équipement utilisateur (300-2), des informations d'emplacement reçues en tant qu'informations d'emplacement de références qui sont signées par le premier nœud de réseau (325) et d'informations d'emplacement mises à jour qui ne sont pas signées par le premier nœud de réseau (325), de sorte que l'autre équipement utilisateur (300-2) puisse vérifier les informations d'emplacement mises à jour au moins sur la base des informations d'emplacement de référence,
dans lequel la transmission (S445, S460, S610, S930) amène l'autre équipement utilisateur (300-2) à :
- déterminer une différence de temps entre un premier horodatage des informations d'emplacement de référence et un deuxième horodatage des informations d'emplacement mises à jour ; et
- déterminer que les informations d'emplacement mises à jour sont invalides en réponse à la détermination que la différence de temps est supérieure ou égale à un seuil de temps qui est prédéterminé ou configuré.

12. Procédé (900) selon la revendication 11, dans lequel les informations d'emplacement de référence et les informations d'emplacement mises à jour sont transmises séparément ; et/ou
dans lequel les informations d'emplacement mises à jour sont des informations d'emplacement sur la base du système de positionnement mondial en temps réel.

13. Procédé (900) selon la revendication 11 ou 12, dans lequel, pour chacune des informations d'emplacement de référence, plusieurs informations d'emplacement mises à jour sont transmises ; et/ou
dans lequel les informations d'emplacement mises à jour présentent un horodatage postérieur à celui des informations d'emplacement de référence.

14. Procédé (900) selon l'une quelconque des revendications 11 à 13, dans lequel au moins l'un parmi l'équipement utilisateur (300-1) et l'autre équipement utilisateur (300-2) est un véhicule ; et/ou
dans lequel l'équipement utilisateur (300-1) communique avec l'autre équipement utilisateur (300-2) via une signalisation de véhicule à véhicule.

15. Equipement utilisateur (300-1, 1200, 1400), comprenant :
un processeur (1206) ; et
une mémoire (1208) stockant des instructions qui, lorsqu'elles sont exécutées par le processeur (1206), amènent le processeur (1206) à réaliser le procédé (900) selon l'une quelconque des revendications 11 à 14.
